# EUROPÄISCHE PATENTSCHRIFT

(11) **EP 3 837 296 B1**
(45) Veröffentlichungstag und Bekanntmachung des Hinweises auf die Patenterteilung: **12.10.2022**
(21) Anmeldenummer: 19749365.3
(22) Anmeldetag: 08.08.2019
(51) Int. Cl.: C08G 18/48, C08G 18/65, C08G 18/66, C08G 18/76, C08G 18/16, C08G 18/18, C08G 18/24, C08G 18/32, C08G 18/40, C08G 18/42, C08J 9/14, C08G 101/00, C08J 9/00, C08K 5/521

(54) **UMWELTFREUNDLICHE GETRIEBENE POLYURETHANSPRÜHSCHAUMSYSTEME**
ENVIRONMENTALLY FRIENDLY DRIVEN POLYURETHANE FOAM SPRAYING SYSTEMS
SYSTÈME DE MOUSSE DE POLYURÉTHANE À PULVÉRISER ENTRAÎNÉS SANS DANGER POUR L'ENVIRONNEMENT

(30) Priorität: 16.08.2018 EP 18382611
(43) Veröffentlichungstag der Anmeldung: 23.06.2021
(73) Patentinhaber: BASF SE, 67056 Ludwigshafen am Rhein (DE)
(72) Erfinder: ESLAVA, Josep-Daniel, 08191 Rubi (ES); KAMPF, Gunnar, 49448 Lemfoerde (DE); DREISOERNER, Jan-Michael, 49448 Lemfoerde (DE); BRINGUE CAMPI, Josep Maria, 08191 Rubi (ES)
(74) Vertreter: BASF IP Association
(86) Internationale Anmeldenummer: PCT/EP2019/071351
(87) Internationale Veröffentlichungsnummer: WO 2020/035395

(56) Entgegenhaltungen:
- WO-A1-2017/121894
- WO-A1-2018/099824
- US-A1- 2009 099 274

## Beschreibung

Die vorliegende Erfindung betrifft den Aufbau eines Polyurethan-Sprühschaumsystems, ein technisches Verfahren zur Herstellung dieses sowie ein Verfahren zur Herstellung von Po-Iyurethan-Hartschaumstoffen oder Polyisocyanurat-Hartschaumstoffen auf Basis dieses Sprühschaumsystems.

Die Herstellung von Polyurethan-Schaumstoffe, insbesondere von Polyurethan-Hartschaumstoffen, durch Umsetzung von Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Bei Polyurethansprühschaumstoffen handelt es sich um Polyurethanschaumstoffe, die direkt vor Ort durch Sprühen aufgebracht werden. Dadurch ist beispielsweise auch eine Auftragung auf vertikale Flächen sowie "über Kopf" möglich. Die Hauptanwendung von Polyurethansprühschaumstoffen liegen im Bauwesen, beispielsweise bei der Dämmung von Dächern.

Wesentliche Anforderungen an Polyurethan-Sprühschaumstoffe sind eine niedrige Wärmeleitfähigkeit, gute Brandeigenschaften, eine gute Fließfähigkeit, eine ausreichende Haftung des Schaums an verschiedensten Substraten und gute mechanische Eigenschaften. Dabei werden die Polyurethanschaumstoffe üblicherweise im sogenannten Zwei-Komponenten-Verfahren hergestellt, in dem eine Isocyanatkomponente, enthaltend Isocyanate, und eine Polyolkomponente, enthaltend gegenüber Isocyanat reaktive Komponenten, vermischt werden. Üblicherweise werden dabei die weiteren Edukte, wie Treibmittel und Katalysatoren, einer der Komponenten zugegeben.

Es ist bekannt, dass in der Polyurethanschaumindustrie chemische und/oder physikalische Treibmittel zum Aufschäumen des sich parallel bildenden Polymers verwendet werden. Chemische Treibmittel sind solche, die mit der Isocyanat-Funktion unter Bildung eines Gases reagieren, während physikalische Treibmittel einen niedrigen Siedepunkt aufweisen und somit durch die Reaktionswärme in den gasförmigen Zustand übergehen. Üblicherweise erfolgt dabei die Zugabe der chemischen wie auch physikalischen Treibmittel in die PolyolKomponente.

In der Vergangenheit nutze man als physikalisches Treibmittel primär Flourchlorkohlenwasserstoffe. Diese sind jedoch aufgrund der ozonschichtschädigenden Wirkung in weiten Teilen der Welt mittlerweile verboten. Heutzutage werden primär fluorierte Kohlenwasserstoffe HFCs und Kohlenwasserstoffe mit einem niedrigen Siedepunkt, wie Pentane, als physikalische Treibmittel verwendet. Ein Kriterium ist dabei die Lagerstabilität der jeweiligen Komponente.

Aufgrund der Apolarität der Kohlenwasserstoffe, primär Pentane, ist der Löslichkeit dieser Treibmittel in den Polyurethansystemen begrenzt. Die Polyolkomponente neigt somit bei vielen Polyurethansystemen zur Entmischung, so dass es vorteilhaft ist, das Treibmittel erst kurz vor dem Verschäumvorgang zuzudosieren, um mit der kurzen Lagerstabilität der mit Treibmittel beladenen Komponente auszukommen.

Ein weiteres Problem bei der Verwendung von Alkanen als Treibmittel ist deren Brennbarkeit. Durch diese Brennbarkeit sind Alkan-haltige Polyolkomponenten bereits bei geringen Alkangehalten leicht brennbar, was besondere Anforderungen an die Verarbeitungsbedingungen mit sich bringt. Ferner kann das Pentan im Verschäumvorgang teilweise freigesetzt werden. Das dadurch entstehende Explosionsrisiko erfordert hohe Investitionen in Sicherheitseinrichtungen.

Fluorierte Kohlenwasserstoffe (HFCs) kommen immer dann zum Einsatz, wenn die Investitionen in diese Sicherheitseinrichtungen, um Kohlenwasserstoffe als physikalische Treibmittel zu verwenden, zu hoch, oder apparativ nicht umsetzbar sind. HFC weisen zusätzlich noch einen weiteren Vorteil gegenüber den Kohlenwasserstoffen auf, da sie zu Schaumstoffen mit höherer Dämmwirkung führen können. HFCs sind jedoch aufgrund ihres Beitrags zur Erderwärmung, d.h. ihres hohen "Global Warming Potentials", aus Umweltgesichtspunkten in der Kritik und werden deswegen auch in der EU bis Ende 2022 ausgephast.

Bevorzugte physikalische Treibmittel weisen somit ein niedriges Global Warming Potential auf. Dieses ist der Vorteil der halogenierten Olefine, den sogenannten HFOs. Ein Nachteil von HFO-enthaltenden Polyolkomponenten, besonders solchen enthalten spezielle HFOs, wie HFO-1234ze und/oder HCFO-1233zd, ist die Lagerstabilität der Polyolkomponente. So kann schon eine kurze Lagerung der HFO-enthaltenden Polyolkomponente zu einer deutlichen Änderung des Reaktionsprofils und zu Schaumstoffen mit deutlich geringerer Qualität bis hin zum Schaumkollaps führen. Die geringe Lagerstabilität basiert dabei auf einem Zersetzen der Treibmittel in der Polyolkomponente. Dies ist beispielsweise beschrieben in WO 2009048807. Die Abbaureaktion der HFO-Treibmittel kann durch die Verwendung spezifischer Katalysatoren, wie Imidazolderivate, abgebremst werden, dadurch ist die Formulierung jedoch in ihren Freiheitsgraden beschränkt und eine optimale Katalyseeinstellung wird stark beeinträchtigt, wenn nicht gar unmöglich. Ferner wird die Abbaureaktion abgebremst, jedoch nicht komplett gestoppt. Dies ist in der europäischen Patentanmeldung EP 17153938.0 beschrieben.

Aufgabe der Erfindung war es somit ein Polyurethansprühsysytem zu liefern, das es ermöglicht, HFO-basierte, Polyuerthan- bzw. Polyisocyanurat-systeme bereitzustellen, ohne dabei die Freiheitsgrade bei der Formulierung des Systems einzuschränken. Ein weiteres Ziel der vorliegenden Erfindung war es, die Lagerstabilität solcher Systeme nach Möglichkeit zu verbessern. Zusätzlich sollte das System über einen umweltverträglichen Mischprozess möglichst leicht und schnell produzierbar sein. Insbesondere wurden dabei Wege gesucht, um den Aufwand für die Herstellung von Mischungen von HFO-Treibmitteln zu reduzieren und Treibmittelverluste zu reduzieren. Die so hergestellten Polyuerthan- bzw. Polyisocyanurat-Hartschaumstoffe sollten ferner nach Möglichkeit verbesserte mechanische und wärmedämmtechnische Eigenschaften aufweisen.

Die die Aufgabe wird gelöst durch ein Verfahren zur Herstellung eines Polyurethanschaumstoffs bei dem man (a) Polymeres MDI mit einem Gehalt an difunktionellem MDI von kleiner als 40 Gew.-%, (b) Verbindungen mit mindestens zwei mit Isocyanatgruppen reaktiven Wasserstoffatomen, enthaltend (b1) mindestens ein Polyesterpolyol sowie (b2) mindestens ein Polyetherpolyol, (c) gegebenenfalls Flammschutzmittel (d) Treibmittel, enthaltend mindestens eine aliphatische, halogenierte Kohlenwasserstoffverbindung (d1), aufgebaut aus 2 bis 5 Kohlenstoffatomen, mindestens einem Wasserstoffatom und mindestens einem Fluor und/oder Chloratom, wobei die Verbindung (d1) mindestens eine Kohlenstoff-Kohlenstoff-Doppelbindung enthält, (e) gegebenenfalls Katalysator und (f) gegebenenfalls Hilfs- und Zusatzstoffe zu einer Reaktionsmischung vermischt, die Reaktionsmischung auf ein Substrat sprüht und zum Polyurethanschaumstoff aushärten lässt, wobei man eine Isocyanatkomponente (A), enthaltend Polyisocyanate (a) und Treibmittel (d1), und eine Polyolkomponente (B), enthaltend Verbindungen mit mindestens zwei mit Isocyanatgruppen reaktiven Wasserstoffatomen (b), herstellt und anschließend die Isocyanatkomponente (A) und die Polyolkomponente (B) sowie gegebenenfalls weitere Verbindungen (c), (e) und (f) zur Reaktionsmischung vermischt, wobei das Massenverhältnis der Isocyanatkomponente (A) zur Polyolkomponente (B) mindestens 1,2 beträgt. Weiter wird die Aufgabe gelöst durch einen Polyurethanschaumstoff, erhältlich durch ein solches Verfahren sowie die Verwendung einer Isocyanatkomponente (A), enthaltend polymeres MDI mit einem Gehalt an difunktionellem MDI von kleiner als 40 Gew.-% (a) und aliphatische, halogenierte Kohlenwasserstoffverbindung (d1), aufgebaut aus 2 bis 5 Kohlenstoffatomen, mindestens einem Wasserstoffatom und mindestens einem Fluor und/oder Chloratom, wobei die Verbindung (d1) mindestens eine Kohlenstoff-Kohlenstoff-Doppelbindung enthält, und einer Polyolkomponente (B), enthaltend (b1) Polyesterpolyol sowie (b2) mindestens ein Polyetherpolyol, zur Herstellung von Polyurethanschaumstoffen.

Im Rahmen der vorliegenden Erfindung handelt es sich um Polyurethansprühschaumstoffe, die direkt vor Ort durch Sprühen auf das Substrat, beispielsweise ein Gebäudeteil, wie eine Mauer oder ein Dach, aufgebracht werden. Dabei handelt es sich bei dem erfindungsgemäßen Polyurethanschaumstoff um einen Polyurethanhartschaumstoff. Dieser weist eine Druckspannung bei 10 % Stauchung von größer gleich 80 kPa, bevorzugt größer gleich 120 kPa, besonders bevorzugt größer gleich 150 kPa auf. Weiterhin verfügt der erfindungsgemäße Polyurethan-Hartschaumstoff nach DIN ISO 4590 über eine Geschlossenzelligkeit von größer 80%, bevorzugt größer 90 %. Weitere Details zu erfindungsgemäßen PolyurethanHartschaumstoffen finden sich im "Kunststoffhandbuch, Band 7, Polyurethane", Carl Hanser Verlag, 3. Auflage 1993, Kapitel 6, insbesondere Kapitel 6.2.7.1 und 6.5.2.5.

Im Rahmen der vorliegenden Offenbarung sind die Begriffe "Polyesterpolyol" und "Polyesterol" gleichbedeutend, ebenso die Begriffe "Polyetherpolyol" und "Polyetherol". Als Isocyanate (a) wird polymeres Diphenylmethandiisocyanat eingesetzt. Diphenylmethandiisocyanat wird im Folgenden auch als "MDI" bezeichnet. Bei polymerem MDI handelt es sich um ein Gemisch aus zweikernigem MDI und höherkernigen Homologen des MDI, beispielsweise 3, 4 oder 5-kernigen Homologen, das heißt 3, 4 oder 5-funktionellen Isocyanaten. Polymeres MDI kann zusammen mit weiteren, in der Polyurethanchemie üblichen Diisocyanaten, wie Toluoldiisocyanat(TDI) oder Naphthalendiisocyanat (NDI), eingesetzt werden. Dabei ist es erfindungswesentlich, dass der Gehalt an aromatischen Diisocyanaten höchstens 40 Gew.-%, bevorzugt höchstens 38 Gew.-%, mehr bevorzugt höchstens 35 Gew.%, besonders bevorzugt höchstens 33 und insbesondere höchstens 31 Gew.-% beträgt, jeweils bezogen auf das Gesamtgewicht an Diisocyanaten und höherkernigen Homologen des MDI. Vorzugsweise beträgt der der Gehalt an Diisocyanaten mindestens 10 Gew.-%, besonders bevorzugt mindestens 20 Gew.-% und insbesondere mindestens 25 Gew.-%, bezogen auf das Gesamtgewicht an Diisocyanaten und höherkernigen Homologen des MDI. Vorzugsweise enthalten die Diisocyanate mindestens 80 Gew.-% Diphenylmethandiisocyanat, besonders bevorzugt mindestens 90 Gew.-% Diphenylmethandiisocyanat und insbesondere ausschließlich Diphenylmethandiisocyanat, jeweils bezogen auf das Gesamtgewicht der Diisocyanate. Dabei beträgt die Viskosität der Polyisocyanate (a) bei 25 ° C vorzugsweise 250 mPas bis 1000 mPas, mehr bevorzugt 300 mPas bis 800 mPas, besonders bevorzugt 400 mPas bis 700 mPas und insbesondere 450 mPas bis 550 mPas.

Als Verbindungen mit gegenüber Isocyanaten reaktiven Gruppen (b) können alle bekannten Verbindungen mit mindestens zwei gegenüber Isocyanaten reaktiven Wasserstoffatomen eingesetzt werden, beispielsweise solche mit einer Funktionalität von 2 bis 8 und einem zahlenmittleren Molekulargewicht von 62 bis 15000 g/mol. So können beispielsweise Verbindungen, ausgewählt aus der Gruppe der Polyetherpolyole, Polyesterpolyole oder Mischungen daraus, verwendet werden. Vorzugsweise weisen Polyetherole und Polyesterole ein Molekulargewicht von 150 bis 15.000 g/mol auf. Neben Polyetherolen und Polyesterolen können auch niedermolekulare Kettenverlängerungs- und/oder Vernetzungsmittel eingesetzt werden.

Polyetherole werden beispielsweise hergestellt aus Epoxiden, wie Propylenoxid und/oder Ethylenoxid, oder aus Tetrahydrofuran mit wasserstoffaktiven Starterverbindungen, wie aliphatischen Alkoholen, Phenolen, Aminen, Carbonsäuren, Wasser oder Verbindungen auf Naturstoffbasis, wie Saccharose, Sorbit oder Mannit, unter Verwendung eines Katalysators. Zu nennen sind hier basische Katalysatoren oder Doppelmetallcyanidkatalysatoren, wie beispielweise in PCT/EP2005/010124, EP 90444 oder WO 05/090440 beschrieben.

Polyesterole werden z.B. hergestellt aus aliphatischen oder aromatischen Dicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Veresterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Die Verbindungen mit mindestens zwei mit Isocyanatgruppen reaktiven Wasserstoffatomen (b) enthalten erfindungsgemäß (b1) mindestens ein Polyesterpolyol sowie (b2) mindestens ein Polyetherpolyol.

Geeignete Polyesterpolyole (b1) können aus organischen Dicarbonsäuren mit 2 bis 12 Kohlenstoffatomen, vorzugsweise aromatischen, oder Gemischen aus aromatischen und aliphatischen Dicarbonsäuren und mehrwertigen Alkoholen, vorzugsweise Diolen, mit 2 bis 12 Kohlenstoffatomen, vorzugsweise 2 bis 6 Kohlenstoffatomen, hergestellt werden.

Als Dicarbonsäuren kommen insbesondere in Betracht: Bernsteinsäure, Glutarsäure, Adipinsäure, Korksäure, Azelainsäure, Sebazinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride, eingesetzt werden. Als aromatische Dicarbonsäuren werden vorzugsweise Phthalsäure, Phthalsäureanhydrid, Terephthalsäure und/oder Isophthalsäure im Gemisch oder alleine verwendet. Als aliphatische Dicarbonsäuren werden vorzugsweise Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure verwendet. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. εCaprolacton oder Hydroxycarbonsäuren, z.B. ω-Hydroxycapronsäure.

Zur Herstellung der Polyesterpolyole kommen auch biobasierte Ausgangsstoffe und/oder deren Derivate in Frage, wie z. B. Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, Hydroxyl-modifizierten Fettsäuren und Fettsäureester basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Vorzugsweise enthalten die Polyesterpolyole (b1) mindestens ein Polyesterol (b1a), das erhältlich ist durch Veresterung von
(b1a1) 10 bis 80 Mol-% einer Dicarbonsäurezusammensetzung, enthaltend
   (b1a11) 20 bis 100 Mol-%, bezogen auf die Dicarbonsäurezusammensetzung, einer oder mehrerer aromatischer Dicarbonsäuren oder Derivate derselben,
   (b1a12) 0 bis 80 Mol-%, bezogen auf die Dicarbonsäurezusammensetzung, einer oder mehrerer aliphatischer Dicarbonsäuren oder Derivate derselben,
(b1a2) 0 bis 30 Mol-% einer oder mehrerer Fettsäuren und/oder Fettsäurederivate,
(b1a3) 2 bis 70 Mol-% eines oder mehrerer aliphatischer oder cycloaliphatischer Diole mit 2 bis 18 C-Atomen oder Alkoxylate derselben,
(b1a4) größer 0 bis 80 Mol-% eines Alkoxylierungsprodukts mindestens eines Startermoleküls mit einer mittleren Funktionalität von mindestens zwei,
jeweils bezogen auf die Gesamtmenge der Komponenten (b1a1) bis (bla4), wobei sich die Komponenten (b1a1) bis (bla4) zu 100 Mol-% addieren.

Vorzugsweise enthält die Komponente b1a11) mindestens eine Verbindung, die aus der Gruppe bestehend aus Terephthalsäure, Dimethylterephthalat (DMT), Polyethylenterephthalat (PET), Phthalsäure, Phthalsäureanhydrid (PSA) und Isophthalsäure ausgewählt wird. Besonders bevorzugt enthält die Komponente b1a1) mindestens eine Verbindung aus der Gruppe bestehend aus Terephthalsäure, Dimethylterephthalat (DMT), Polyethylenterephthalat (PET) und Phthalsäureanhydrid (PSA). Ganz besonders bevorzugt enthält die Komponente b1a11) Phthalsäureanhydrid, Dimethylterephthalat (DMT), Terephthalsäure oder Gemische daraus. Die aromatischenDicarbonsäuren oder deren Derivate der Komponente b1a1) werden besonders bevorzugt aus den vorgenannten aromatischen Dicarbonsäuren bzw. Dicarbonsäurederivaten und im speziellen aus Terephthalsäure und/oder Dimethylterephthalat (DMT) ausgewählt. Terephthalsäure und/oder DMT in Komponente b1a11) führt zu speziellen Polyesters b1a) auf Basis mindestens eines Polyethers mit besonders guten Brandschutzeigenschaften.

Im Allgemeinen sind aliphatische Dicarbonsäuren oder -derivate (Komponente b1a12) zu 0 bis 50 Mol-%, bevorzugt 0 bis 30 Mol-%, besonders bevorzugt 0 bis 20 Mol-% und spezifischer 0 bis 10 Mol-% in der Dicarbonsäurezusammensetzung b1a12) enthalten. Im Speziellen enthält die Dicarbonsäurezusammensetzung b1a12) keine aliphatischen Dicarbonsäuren oder Derivate derselben und besteht somit zu 100 Mol-% aus einer oder mehreren aromatischen Dicarbonsäuren oder deren Derivate b1a11), wobei die vorgenannten bevorzugt sind.

In einer Ausführungsform der Erfindung besteht die Fettsäure oder das Fettsäurederivat b1a2) aus einer Fettsäure bzw. Fettsäuremischung, einem oder mehreren Glycerin-Estern von Fettsäuren, bzw. von Fettsäuremischungen und/oder einem oder mehreren Fettsäuremonoestern, wie beispielsweise Biodiesel oder Methylestern von Fettsäuren, besonders bevorzugt besteht die Komponente b1a2) aus einer Fettsäure bzw. Fettsäuremischung und/oder einem oder mehreren Fettsäuremonoestern, spezifischer besteht die Komponente b1a2) aus einer Fettsäure bzw. Fettsäuremischung und/oder Biodiesel und im speziellen besteht die Komponente b1a2) aus einer Fettsäure bzw. Fettsäuremischung.

In einer bevorzugten Ausführungsform der Erfindung ist die Fettsäure oder das Fettsäurederivat b1a2) ausgewählt aus der Gruppe bestehend aus Rizinusöl, Polyhydroxyfettsäuren, Ricinolsäure, Stearinsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, tierischem Talg, wie beispielsweise Rindertalg, Fettsäuren, Hydroxyl-modifizierten Fettsäuren, Biodiesel, Methylestern von Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure sowie Mischfettsäuren.

In einer besonders bevorzugten Ausführungsform der vorliegenden Erfindung ist die Fettsäure oder das Fettsäurederivat b1a2) Ölsäure, Biodiesel, Sojaöl, Rapsöl oder Talg, besonders bevorzugt Ölsäure, Biodiesel, Sojaöl, Rapsöl oder Rindertalg, spezifischer Ölsäure oder Biodiesel und im speziellen Ölsäure. Die Fettsäure oder das Fettsäurederivat verbessert unter anderem die Treibmittellöslichkeit bei der Herstellung von Polyurethanhartschaumstoffen.

Ganz besonders bevorzugt umfasst Komponente b1a2) kein Triglycerid, insbesondere kein Öl oder Fett. Das durch die Veresterung bzw. Umesterung freiwerdende Glycerin aus dem Triglycerid verschlechtert wie oben ausgeführt die Maßhaltigkeit des Hartschaums. Bevorzugte Fettsäuren und Fettsäurederivate sind im Rahmen von Komponente b2) insofern die Fettsäuren selbst sowie Alkylmonoester von Fettsäuren oder Alkylmonoester von Fettsäuregemischen, insbesondere die Fettsäuren selbst und/oder Biodiesel.

Vorzugsweise ist das aliphatische oder cycloaliphatische Diol b1a3) ausgewählt aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben. Besonders bevorzugt ist das aliphatische Diol b1a3) Monoethylenglykol oder Diethylenglykol, insbesondere Diethylenglykol.

Vorzugsweise weist das Polyol b1a4) eine Funktionalität größer oder gleich 2,7, insbesondere größer oder gleich 2,9 auf. Im Allgemeinen weist er eine Funktionalität von kleiner oder gleich 6, bevorzugt kleiner oder gleich 5, besonders bevorzugt kleiner oder gleich 4 auf.

In einer bevorzugten Ausführungsform ist das Polyol b1a4) ausgewählt aus der Gruppe bestehend aus Akloxylaten von Sorbit, Pentaerythrit, Trimethylolpropan, Glycerin, Polyglycerin und deren Gemischen.

In einer bevorzugten Ausführungsform ist das Polyol b1a4) ein Alkoxylat der benannten Polyole erhältlich durch Alkoxylierung mit Ethylenoxid oder Propylenoxid, vorzugsweise Ethylenoxid, was zu Polyurethan-Hartschaumstoffen mit verbesserten Brandschutzeigenschaften führt.

In einer besonders bevorzugten Ausführungsform der vorliegenden Erfindung wird die Komponente b1a4) durch anionische Polymerisation von Propylenoxid oder Ethylenoxid, bevorzugt Ethylenoxid, in Gegenwart von Alkoxylierungs-Katalysatoren wie Alkalihydroxiden, wie Natrium- oder Kaliumhydroxid, oder Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und Imidazolderivate sowie Mischungen daraus, unter Verwendung des Startermoleküls hergestellt. Bevorzugte Alkoxylierungskatalysatoren sind dabei KOH und aminische Alkoxylierungs-Katalysatoren. Da bei Verwendung von KOH als Alkoxylierungs-Katalysator der Polyether zunächst neutralisiert werden muß und das enstehende Kaliumsalz abgetrennt werden muß, bevor der Polyether als Komponente B14) in der Veresterung eingesetzt werden kann, ist die Verwendung von aminischen Alkoxylierungs-Katalysatoren bevorzugt. Bevorzugte aminische Alkoxylierungs-Katalysatoren sind ausgewählt aus der Gruppe enthaltend Dimethylethanolamin (DMEOA), Imidazol und Imidazolderivate sowie Mischungen daraus, besonders bevorzugt Imidazol.

Vorzugsweise weist das Polyetherpolyol b1a4) eine OH-Zahl größer oder gleich 100, bevorzugt größer oder gleich 200, besonders bevorzugt größer oder gleich 300, spezifischer größer oder gleich 400, im Speziellen größer oder gleich 500 mg KOH/g und spezifisch größer oder gleich 600 mg KOH/g auf.

Ferner weist das Polyetherpolyol b1a4) bevorzugt eine OH-Zahl kleiner oder gleich 1800, noch bevorzugter kleiner oder gleich 1400, besonders bevorzugt kleiner oder gleich 1200, spezifischer kleiner oder gleich 1000, im Speziellen kleiner oder gleich 800 und spezifisch kleiner oder gleich 700 mg KOH/g auf.

Vorzugsweise wird die Komponente b1a1) in Mengen von 20 bis 70 Mol-%, besonders bevorzugt 25 bis 50 Mol-% bezogen auf die Summe der Komponenten b1a1) bis b1a4) eingesetzt.

Vorzugsweise wird die Komponente b1a2) in Mengen von 0,1 bis 28 Mol-%, besonders bevorzugt 0,5 bis 25 Mol-%, spezifischer 1 bis 23 Mol-%, noch spezifischer 1,5 bis 20 Mol-%, spezifisch 2 bis 19 Mol-% und im speziellen 5 bis 18 Mol-% bezogen auf die Summe der Komponenten b1a1) bis b1a4) eingesetzt.

Vorzugsweise wird die Komponente b1a3) in Mengen von 5 bis 60 Mol-%, bevorzugt von 10 bis 55 Mol-%, besonders bevorzugt von 25 bis 45 Mol-% bezogen auf die Summe der Komponenten b1a1) bis b1a4) eingesetzt.

Vorzugsweise wird die Komponente b1a4) in Mengen von 2 bis 70 Mol-%, bevorzugt 5 bis 60 Mol-%, besonders bevorzugt 7 bis 50 Mol-% bezogen auf die Summe der Komponenten b1a1) bis b1a4) eingesetzt.

Vorzugsweise werden pro kg Polyesterpolyol der Komponente b1a) mindestens 200 mmol, besonders bevorzugt mindestens 400 mmol, insbesondere bevorzugt mindestens 600 mmol, speziell bevorzugt mindestens 800 mmol, im speziellen mindestens 1000 mmol der Komponente b1a4) verwendet.

Vorzugsweise weist ein Polyesterpolyol der Komponente b1a) eine zahlengewichtete mittlere Funktionalität von größer oder gleich 2, bevorzugt von größer als 2, besonders bevorzugt von größer als 2,2 und insbesondere von größer als 2,3 auf, was zu einer höheren Vernetzungsdichte des damit hergestellten Polyurethans und damit zu besseren mechanischen Eigenschaften des Polyurethanschaums führt.

Zur Herstellung der Polyesterpolyole können die aliphatischen und aromatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas wie Stickstoff in der Schmelze bei Temperaturen von 150 bis 280°C, vorzugsweise 180 bis 260°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 400 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder - derivate und mehrwertigen Alkohole vorteilhafterweise im Molverhältnis von 1 : 1 bis 2,2, vorzugsweise 1 : 1,05 bis 2,1 und besonders bevorzugt 1 : 1,1 bis 2,0 polykondensiert.

Die erhaltenen Polyesterpolyole weisen im Allgemeinen ein zahlenmittleres Molekulargewicht von 300 bis 3000, vorzugsweise 400 bis 1000 und insbesondere 450 bis 800 auf.

Weiter enthält die Komponente (b) neben dem Polyesterpolyol (b1a) vorzugsweise ein Polyesterpolyol (b1b), wobei das Polyesterpolyol (b1b) unter Abwesenheit der Komponente (b1a4) hergestellt wird. Vorzugsweise wird der das Polyesterpolyol (b1b) analog zum Polyesterpolyol (b1a) erhalten, wobei anstelle der Komponente (bla4) Alkohole (b1b4) mit einer Funktionalität von 3 oder mehr eingesetzt werden, wobei diese nicht alkoxyliert sind. Besonders bevorzugt werden als Alkohole (b1b4) Alkohole eingesetzt, ausgewählt aus der Gruppe, bestehend aus Sorbit, Pentaerythrit, Trimethylolpropan, Glycerin und Polyglycerin.

Vorzugsweise beträgt das Massenverhältnis der Polyesterpolyole (b1a) zu den Polyesterolen (b1b) mindestens 0,25, weiter bevorzugt mindestens 0,5, besonders bevorzugt mindestens 0,8 und insbesondere wird keine Komponente (b1b) verwendet.

Die Polyetherole (b2) werden nach bekannten Verfahren, beispielsweise durch anionische Polymerisation von Alkylenoxiden unter Zusatz mindestens eines Startermoleküls, das 2 bis 8, vorzugsweise 2 bis 6 reaktive Wasserstoffatome gebunden enthält, in Gegenwart von Katalysatoren erhalten. Werden Mischungen aus Startermolekülen mit unterschiedlicher Funktionalität eingesetzt, können gebrochenzahlige Funktionalitäten erhalten werden. Einflüsse auf die Funktionalität, beispielsweise durch Nebenreaktionen, werden bei der nominalen Funktionalität nicht berücksichtigt. Als Katalysatoren können Alkalihydroxide, wie Natriumoder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Auch aminische Alkoxylierungs-Katalysatoren, wie Dimethylethanolamin (DMEOA), Imidazol und Imidazolderivate können eingesetzt werden. Weiterhin können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, 1,2-Propylenoxid, Ethylenoxid, 1,2- bzw. 2,3-Butylenoxid, jeweils alleine oder in Form von Mischungen eingesetzt. Vorzugsweise verwendet werden Ethylenoxid und/oder 1,2-Propylenoxid.

Als Startermoleküle kommen Hydroxylgruppen- oder Amingruppenhaltige Verbindungen, beispielsweise Ethylenglycol, Diethylenglycol, Glycerin, Trimethylolpropan, Pentaerythrit, Zuckerderivate, wie Saccharose, Hexitderivate, wie Sorbit, Methylamin, Ethylamin, Isopropylamin, Butylamin, Benzylamin, Anilin, Toluidin, Toluoldiamin (TDA), Naphtylamin, Ethylendiamin, Diethylentriamin, 4,4 ' -Methylendianilin, 1,3,-Propandiamin, 1,6-Hexandiamin, Ethanolamin, Diethanolamin, Triethanolamin sowie andere zwei oder mehrwertige Alkohole oder ein oder mehrwertige Amine in Betracht. Da diese hochfunktionellen Verbindungen bei den üblichen Reaktionsbedingungen der Alkoxylierung in fester Form vorliegen, ist es allgemein üblich diese gemeinsam mit Ko-Initiatoren zu alkoxylieren. Als Ko-Initiatoren eignen sich z.B. Wasser, mehrfunktionelle niedere Alkohole, z.B. Glyzerin, Trimethylolpropan, Pentaerythrit, Diethylenglycol, Ethylenglycol, Propylenglycol und deren Homologe. Als weitere Ko-Initiatoren kommen beispielsweise in Betracht: organische Fettsäuren, Fettsäuremonoester oder Fettsäuremethylester wie z.B. Ölsäure, Stearinsäure, Ölsäuremethylester, Stearinsäuremethylester oder Biodiesel, welche dazu dienen die Treibmittellöslichkeit bei der Herstellung von Polyurethanhartschaumstoffen zu verbessern.

Bevorzugte Startermoleküle zur Herstellung der Polyetherpolyole (b2) sind Sorbitol, Saccharose, Ethylendiamin, TDA, Trimethylolpropan, Pentaerythrit, Glyzerin, Biodiesel und Diethylenglycol. Besonders bevorzugte Startermoleküle sind Saccharose, Glycerin, Biodiesel, TDA und Ethylendiamin, insbesondere Saccharose, Ethylendiamin und/oder Toluylendiamin.

Die im Rahmen von Komponente (b2) eingesetzten Polyetherpolyole weisen vorzugsweise eine Funktionalität von 2 bis 6 und insbesondere von 2,5 bis 5,5 und zahlenmittlere Molekulargewichte von vorzugsweise 150 bis 3000, besonders bevorzugt von 150 bis 1500 und insbesondere von 250 bis 800 g/mol auf. Die OH Zahl der Polyetherpolyole der Komponente (b1) beträgt vorzugsweise von 1200 bis 100, vorzugsweise von 1000 bis 200 und insbesondere von 800 bis 350 mg KOH/g.

Weiter kann die Komponente (b) Kettenverlängerungs- und/oder Vernetzungsmittel enthalten, beispielsweise zur Modifizierung der mechanischen Eigenschaften, z. B. der Härte. Als Kettenverlängerungs- und/oder Vernetzungsmittel verwendet werden Diole und/oder Triole sowie Aminoalkohole mit Molekulargewichten kleiner als 150 g/mol, vorzugsweise von 60 bis 130g/mol. In Betracht kommen beispielsweise aliphatische, cycloaliphatische und/oder araliphatische Diole mit 2 bis 8, vorzugsweise 2 bis 6 Kohlenstoffatomen, wie z. B. Ethylenglykol, 1,2-Propylenglycol, Diethylenglycol, Dipropylenglycol, 1,3-Propandiol, 1,4-Butandiol, 1,6-Hexandiol, o-, m-, p-Dihydroxycyclohexan, Bis-(2-hydroxy-ethyl)-hydrochinon. Ebenso in Betracht kommen aliphatische und cycloaliphatische Triole wie Glycerin, Trimethylolpropan und 1,2,4- und 1,3,5-Trihydroxycyclohexan.

Sofern zur Herstellung der Polyurethan-Hartschaumstoffe Kettenverlängerungsmittel, Vernetzungsmittel oder Mischungen davon Anwendung finden, werden diese zweckmäßigerweise in einer Menge von 0 bis 15 Gew.-%, vorzugsweise von 0 bis 5 Gew.-%, bezogen auf das Gesamtgewicht der Komponente (B) eingesetzt. Vorzugsweise enthält die Komponente (B) weniger als 2 Gew.-% und besonders bevorzugt weniger als 1 Gew.-% und insbesondere kein Kettenverlängerungs- und/oder Vernetzungsmittel.

Vorzugsweise beträgt das Massenverhältnis der Summe der Komponenten (b1) zur Summe der Komponenten (b2) kleiner als 7, insbesondere kleiner 5, bevorzugt kleiner als 4, besonders bevorzugt kleiner als 3, insbesondere bevorzugt kleiner als 2, speziell bevorzugt kleiner als 1,7 und ganz besonders bevorzugt kleiner als 1,5. Weiter ist das erfindungsgemäße Massenverhältnis der Summe der Komponenten (b1) zur Summe der Komponenten (b2) größer als 0,1, bevorzugt größer als 0,2, insbesondere größer als 0,2, bevorzugt größer als 0,4, besonders bevorzugt größer als 0,5, speziell bevorzugt größer als 0,8 und ganz besonders bevorzugt größer als 1.

Als Flammschutzmittel (c) können im Allgemeinen die aus dem Stand der Technik bekannten Flammschutzmittel verwendet werden. Geeignete Flammschutzmittel sind beispielsweise bromierte Ester, bromierte Ether (Ixol) oder bromierte Alkohole wie Dibromneopentylakohol, Tribromneopentylalkohol und PHT-4-Diol, sowie chlorierte Phosphate wie Tris-(2-chlorethyl)phosphat, Tris-(2-chlorpropyl)phosphat (TCPP), Tris(1,3-dichlorpropyl)phosphat, Trikresylphosphat, Tris-(2,3-dibrompropyl)phosphat, Tetrakis-(2-chlorethyl)-ethylendiphos-phat, Dimethylmethanphosphonat, Diethanolaminomethylphosphonsäurediethylester sowie handelsübliche halogenhaltige Flammschutzpolyole. Als weitere Phosphate oder Phosphonate können Diethylethanphosphonat (DEEP), Triethylphosphat (TEP), Dimethylpropylphosphonat (DMPP), Diphenylkresylphosphat (DPK) als flüssige Flammschutzmittel eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin, Blähgraphit und gegebenenfalls aromatische Polyester zum Flammfestmachen der Polyurethan-Hartschaumstoffe verwendet werden.

Bevorzugte Flammschutzmittel beinhalten kein Brom. Besonders bevorzugte Flammschutzmittel bestehen aus Atomen ausgewählt aus der Gruppe bestehend aus Kohlenstoff, Wasserstoff, Phosphor, Stickstoff, Sauerstoff und Chlor, spezieller aus der Gruppe bestehend aus Kohlenstoff, Wasserstoff, Phosphor und Chlor.

Bevorzugte Flammschutzmittel weisen keine mit Isocyanatgruppen reaktive Gruppen auf. Vorzugsweise sind die Flammschutzmittel bei Raumtemperatur flüssig. Besonders bevorzugt sind TCPP, DEEP, TEP, DMPP und DPK, insbesondere TCPP.

Im Allgemeinen beträgt der Anteil des Flammschutzmittels (c), sofern die Komponente (c) in der Abmischung der Komponenten (b) bis (f) Verwendung findet, 5 bis 40 Gew.-%, bevorzugt 8 bis 30 Gew.-%, besonders bevorzugt 10 bis 25 Gew.-%, bezogen auf das Gesamtgewicht der Komponenten (b) bis (g).

Erfindungsgemäß wird mindestens ein Treibmittel (d) eingesetzt. Dieses enthält mindestens eine aliphatische, halogenierte Kohlenwasserstoffverbindung (d1), aufgebaut aus 2 bis 5, vorzugsweise 3 oder 4 Kohlenstoffatomen, mindestens einem Wasserstoffatom und mindestens einem Fluor und/oder Chloratom, wobei die Verbindung (d1) mindestens eine Kohlenstoff-Kohlenstoff-Doppelbindung enthält. Geeignete Verbindungen (d1) umfassen Trifluorpropene und Terafluorpropene, wie (HFO-1234), Pentafluorpropene, wie (HFO-1225), Chlortrifluorpropene, wie (HFO-1233), Chlordifluorpropenes und Chlorotetrafluorpropene sowie Mischungen aus einer oder mehreren dieser Komponenten. Besonders bevorzugt sind Tetrafluorpropene, Pentafluorpropene und Chlortrifluorpropene, wobei das ungesättigte, terminale Kohlenstoffatom mehr als einen Chlor- oder Fluorsubstituenten trägt. Beispiele sind 1,3,3,3-Tetrafluorpropen (HFO-1234ze); 1,1,3,3-Tetrafluorpropen; 1,2,3,3,3-Pentafluorpropen (HFO-1225ye); 1,1,1-Trifluorpropen; 1,1,1,3,3-Pentafluorpropen (HFO-1225zc); 1,1,1,3,3,3-Hexafluorbut-2-en, 1,1,2,3,3-Pentafluorpropen (HFO-1225yc); 1,1,1,2,3-Pentafluorpropen (HFO-1225yez); 1-Chlor-3,3,3-trifluorpropen (HCFO-1233zd); 1,1,1,4,4,4-Hexaflu-orbut-2-en oder Mischungen zweier oder mehrerer dieser Komponenten.

Besonders bevorzugte Verbindungen (d1) sind Hydroolefine, ausgewählt aus der Gruppe, bestehend aus Trans-1-chlor-3,3,3-trifluor-propen (HCFO-1233zd(E)), cis-1-Chlor-3,3,3-trifluorpropen (HCFO-1233zd(Z)), trans-1,1,1,4,4,4-Hexafluorbut-2-en (HFO-1336mzz(E)), cis-1,1,1,4,4,4-Hexafluorbut-2-en (HFO-1336mzz(Z)), trans-1,3,3,3-Tetrafluorprop-1-en (HFO-1234ze(E)), cis-1,3,3,3-Tetrafluorprop-1-en (HFO-1234ze(Z)) oder Mischungen einer oder mehrerer Komponenten davon.

Zu Treibmitteln, welche zur Herstellung der erfindungsgemäßen Polyurethanschaumstoffe verwendet werden, gehören darüber hinaus vorzugsweise Wasser, Ameisensäure und Gemische daraus. Diese reagieren mit Isocyanatgruppen unter Bildung von Kohlenstoffdioxid und im Falle von Ameisensäure zu Kohlenstoffdioxid und Kohlenstoffmonoxid. Da diese Treibmittel das Gas durch eine chemische Reaktion mit den Isocyanatgruppen freisetzen, werden sie als chemische Treibmittel bezeichnet. Daneben können physikalische Treibmittel, wie niedrig siedende Kohlenwasserstoffe eingesetzt werden. Geeignet sind insbesondere Flüssigkeiten, welche gegenüber den eingesetzten Isocyanaten inert sind und Siedepunkte unter 100 ° C, vorzugsweise unter 50 ° C bei Atmosphärendruck aufweisen, so dass sie unter dem Einfluss der exothermen Polyadditionsreaktion verdampfen. Beispiele derartiger, vorzugsweise verwendeter Flüssigkeiten sind aliphatische oder cycloaliphatische Kohlenwasserstoffe mit 4 bis 8 Kohlenstoffatomen, wie Heptan, Hexan, und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden.

Dabei werden im Rahmen der vorliegenden Erfindung physikalische Treibmittel, die nicht unter die Definition von (d1) fallen als physikalische Treibmittel (d2) bezeichnet. Chemische Treibmittel werden als chemische Treibmittel (d3) bezeichnet.

Als chemische Treibmittel (d3) geeignet sind ferner organische Carbonsäuren, wie z.B. Ameisensäure, Essigsäure, Oxalsäure, Ricinolsäure und carboxylgruppenhaltige Verbindungen. Vorzugsweise werden neben den Verbindungen (d1) keine halogenierten Kohlenwasserstoffe als Treibmittel verwendet. Vorzugsweise werden als chemische Treibmittel (d3) Wasser, Ameisensäure-Wasser-Mischungen oder Ameisensäure verwendet, besonders bevorzugte chemische Treibmittel sind Wasser oder Ameisensäure-Wasser-Mischungen.

Bevorzugt werden neben Komponente (d1) mindestens ein chemisches Treibmittel (d3) eingesetzt.

Die eingesetzte Menge des Treibmittels bzw. der Treibmittelmischung liegt im Allgemeinen bei 1 bis 30 Gew.-%, vorzugsweise 1,5 bis 20 Gew.-%, besonders bevorzugt 2,0 bis 15 Gew.%, jeweils bezogen auf die Summe der Komponenten (b) bis (f). Dient Wasser, oder eine Ameisensäure-Wasser-Mischung als Treibmittel, so wird es vorzugsweise der Komponente (B) in einer Menge von 0,2 bis 6 Gew.-%, bezogen auf das Gesamtgewicht der Komponente (b), zugesetzt.

Als Katalysatoren (e) zur Herstellung der Polyurethanschaumstoffe werden insbesondere Verbindungen verwendet, die die Reaktion der reaktive Wasserstoffatome, insbesondere Hydroxylgruppen, enthaltenden Verbindungen der Komponenten (b) bis (f) mit den Polyisocyanaten (a) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N,N,N,N-Tetramethylhexandi-amin-1,6,

Pentamethyldiethylentriamin, Bis(2-dimethylaminoethyl)ether, Dimethylpiperazin, N-Dimethyl-aminoethylpiperidin, 1,2-Dimethylimidazol, 1-Azabicyclo-(2,2,0)-octan, 1,4.Diazabicyc-lo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylamino-ethoxy)ethanol, N,N',N"-Tris-(dialkylaminoalkyl)hexahydrotriazine, z.B. N,N',N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydro-pyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, Alkalicarboxylate sowie Alkalisalze von langkettigen Fettsäuren mit 10 bis 20 C-Atomen und gegebenenfalls seitenständigen OH-Gruppen.

Weiterhin kommen als Katalysatoren einbaubare Amine in Betracht, d.h. vorzugsweise Amine mit einer OH, NH oder NH2 Funktion, wie beispielsweise Ethylendiamin, Triethanolamin, Diethanolamin, Ethanolamin und Dimethylethanolamin.

Vorzugsweise verwendet werden 0,001 bis 10 Gew.-teile Katalysator bzw. Katalysatorkombination, bezogen auf 100 Gewichtsteile der Komponente (b). Es besteht auch die Möglichkeit, die Reaktionen ohne Katalyse ablaufen zu lassen. In diesem Fall wird üblicherweise die katalytische Aktivität von mit Aminen gestarteten Polyolen ausgenutzt.

Wird beim Verschäumen ein Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen-oder Alkalimetallsalze, speziell Ammonium- oder Alkalimetallcarboxylate, alleine oder in Kombination mit tertiären Aminen. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

In einer bevorzugten Ausführungsform der Erfindung besteht ein Teil der Komponente (e) aus Zinnsalzen, wie Zinndioctoat, Zinndiethylhexoat und Dibutylzinndilaurat.

Der Reaktionsmischung zur Herstellung der erfindungsgemäßen Polyurethanschaumstoffe können gegebenenfalls noch weitere Hilfsmittel und/oder Zusatzstoffe (f) zugesetzt werden. Genannt seien beispielsweise oberflächenaktive Substanzen, Schaumstabilisatoren, Zellregler, Füllstoffe, Lichtstabilisatoren, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-teile, bezogen auf 100 Gew.-Teile der Komponente (b), angewandt.

Als Schaumstabilisatoren können übliche Schaumstabilisatoren, beispielsweise solche auf Silikonbasis, wie Siloxanoxalkylen-Mischpolymerisaten und anderen Organopolysiloxanen und/oder oxethylierten Alkylphenolen und/oder oxethylierten Fettalkohole verwendet werden.

Als Lichtstabilisatoren können in der Polyurethanchemie bekannte Lichtstabilisatoren eingesetzt werden. Diese umfassen phenolische Stabilisatoren, wie 3,5-Di-tert.-Butyl-4-Hydro-xyToluene und/oder Irganoxtypen der Firma BASF, Phosphite, wie Triphenylphosphite und/oder Tris(nonylphenyl)phosphite, UV-Absorber, wie 2- (2-hydroxy-5-methylphenyl) - benzotriazole, 2-(5-chloro-2H-benzotriazol-2-yl)-6-(1,1-dimethylethyl)-4-methylphenol, 2-(2H-benzotriazole-2-yl)-6-dodecyl-4-methylphenol, verzweigt und linear, oder 2,2 ^{'} -(2,5-thiopheneidyl)bis[5-tert-butylbenzoxazole], sowie sogenannte HALS-Stabilisatoren (Hindered Amine Light Stabilizers), wie bis-(1-Octyloxy-2,2,6,6,tetramethyl-4-piperidinyl) sebacate, n-Butyl-(3,5-di-tert-butyl-4-hydroxybenzyl)bis-(1,2,2,6-pentamethyl-4piperidinyl) malonate oder Diethyl succinate polymer mit 4-hydroxy-2,2,6,6-tetramethyl-1-piperidi-neethanol.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (f), zugegeben, wobei jedoch der Gehalt an Matten, Vliesen und Geweben aus natürlichen und synthetischen Fasern Werte bis 80 Gew.-%, bezogen auf das Gewicht der Komponenten (a) bis (f), erreichen kann.

Erfindungsgemäß erfolgt die Herstellung der Polyurethanschaumstoffe durch Vermischen einer Isocyanatkomponente (A), enthaltend Polyisocyanate (a) und Treibmittel (d1), und eine Polyolkomponente (B), enthaltend Verbindungen mit mindestens zwei mit Isocyanatgruppen reaktiven Wasserstoffatomen (b), zu einer Reaktionsmischung und ausreagieren lassen der Reaktionsmischung zum Polyurethanschaumstoff. Dabei wird im Rahmen der vorliegenden Erfindung unter einer Reaktionsmischung die Mischung der Isocyanate (a) und der gegenüber Isocyanat reaktiven Verbindungen (b) bei Reaktionsumsätzen kleiner 90 %, bezogen auf die Isocyanatgruppen, bezeichnet. Vorzugsweise wird dabei im 2_Komponenten Verfahren gearbeitet, wobei alle Einsatzstoffe (a) bis (f) entweder in der Isocyanatkomponente (A) oder in der Polyolkomponente (B) enthalten sind. Dabei werden vorzugsweise alle Stoffe, die mit Isocyanat reagieren können, der Polyolkomponente (B) zugegeben, während Einsatzstoffe, die gegenüber Isocyanaten nicht reaktiv sind, entweder der Isocyanatkomponente (A) oder der Polyolkomponente (B) zugegeben werden können. Falls überhaupt weitere Additive neben dem Treibmittel der Isocyanatmischung zugesetzt werden, so wissen diese bevorzugt im Mittel eine OHZ von < 100 mg KOH/g, besonders bevorzugt < 50 mg KOH/g, spezieller < 10 mg KOH/g. Besonders bevorzugt werden nur solche Additive der Isocyanatkomponente (A) zugegeben, die keine funktionellen Gruppen tragen, welche mit der NCO-Funktion des Isocynats reagieren, d.h. es werden nur Additive verwendet die gegenüber dem Isocyanat inert sind.

Der Anteil der Isocyanate (a) an der Isocyanatkomponente (A) liegt vorzugsweise bei über 10 Gew.-%, mehr bevorzugt bei über 50 Gew.-%, besonders bevorzugt bei über 70 Gew.-%, weiter bevorzugt bei über 80 Gew.-% und insbesondere bei über 90 Gew.-%, jeweils bezogen auf das Gesamtgewicht der Isocyanatkomponente (A).

Der Anteil der Komponente (d1) an der Isocyanatkomponente (A) liegt vorzugsweise bei über 0,5 Gew.-%, mehr bevorzugt bei größer 1 Gew.-%, besonders bevorzugt bei größer 3 Gew.-%, weiter bevorzugt bei größer 5 Gew.-%, noch weiter bevorzugt bei größer 7 Gew.-% und insbesondere bei größer 9 Gew.-%, jeweils bezogen auf das Gesamtgewicht der Isocyanatkomponente (A). Weiter beträgt der Anteil der Komponente (d1) an der Isocyanatkomponente (A) vorzugsweise kleiner 50 Gew.-%, mehr bevorzugt kleiner 30 Gew.-%, besonders bevorzugt kleiner 25 Gew.-%, weiter bevorzugt kleiner 20 Gew.-%, noch weiter bevorzugt kleiner 15 Gew.-% und insbesondere kleiner 12 Gew.-%, jeweils bezogen auf das Gesamtgewicht der Isocyanatkomponente (A).

Falls weitere physikalische Treibmittel (d2) eingesetzt werden, können diese ebenfalls der Isocyanatkomponente (A) zugegeben werden. Der Anteil der Komponente (d2) an der Isocyanatkomponente (A) ist vorzugsweise kleiner als 50 Gew.-%, mehr bevorzugt kleiner 30 Gew-%, noch mehr bevorzugt kleiner 20 Gew.-%, besonders bevorzugt kleiner 15 Gew.-% und insbesondere kleiner 10 Gew.-%. In einer besonders bevorzugten Ausführungsform wird kein chemisches Treibmittel (d3) der Isocyanatkomponente (A) zugegeben.

Falls überhaupt weitere Additive neben dem Treibmittel der Isocyanatkomponente (A) zugesetzt werden, so wissen diese bevorzugt im Mittel eine OHZ von < 100 mg KOH/g, besonders bevorzugt < 50 mg KOH/g, spezieller < 10 mg KOH/g. Im Speziellen werden nur solche Additive verwendet, die keine funktionellen Gruppen tragen, welche mit der NCO-Fuktion des Isocynats reagieren, d.h. es werden nur Additive verwendet die gegenüber dem Isocyanat inert sind.

Neben den Isocyanaten (a) und den Treibmitteln (d1) und gegebenenfalls (d2) enthält die Isocyanatkomponente (A) in einer bevorzugten Ausführungsform eine oder mehrere oberflächenaktive Substanzen, welche die Löslichkeit der Treibmittel (d1) in den Polyisocyanaten verbessern. Hierbei kommen vor allem Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Besonders bevorzugt ist der Einsatz von Schaumstabilisatoren, wie Siloxanoxalkylen-Mischpolymerisaten und anderen Organopolysiloxanen und/oder oxethylierten Alkylphenolen und/oder oxethylierten Fettalkoholen

Vorzugsweise erfolgt die Mischung der Komponenten der Isocyanatkomponente (A) in einem kontinuierlichen Mischapparat. Als Mischapparate können vorzugsweise statische Mischer eingesetzt werden. Derartige Apparaturen sind dem Fachmann allgemein bekannt. Eine derartige Apparatur zur Mischung von Flüssigkeiten ist beispielsweise in EP 0 097 458 beschrieben.

Statische Mischer sind üblicherweise rohrförmige Apparate mit festen Einbauten, die zur Vermischung der Einzelstoffströme über den Rohrquerschnitt dienen. Statische Mischer können in kontinuierlichen Prozessen zur Durchführung verschiedener verfahrenstechnischer Operationen, wie Mischen, Stoffaustausch zwischen zwei Phasen, chemischen Reaktionen oder Wärmeübertragung eingesetzt werden. Die Homogenisierung der Einsatzstoffe wird durch ein mittels einer Pumpe erzeugtes Druckgefälle bewirkt. Je nach Art der Strömung im statischen Mischer können zwei grundlegende Mischprinzipien unterschieden werden.

In laminar durchströmten Mischern wird durch Aufteilung und Umlagerung der Strömung der einzelnen Komponenten homogenisiert. Durch eine fortlaufende Verdopplung der Anzahl der Schichten werden die Schichtdicken so weit verkleinert, bis eine vollständige Makro-Vermischung erreicht ist. Die Mikrovermischung durch Diffusionsvorgänge ist abhängig von der Verweilzeit. Für Mischaufgaben mit laminarer Strömung werden Wendelmischer oder Kreuzkanalmischer verwendet. Die laminare Strömung ähnelt einer normalen Rohrströmung mit geringen Scherkräften und einer engen Verweilzeitverteilung.

In turbulent durchströmten Mischern werden gezielt Wirbel erzeugt, um auf diese Art die einzelnen Stoffströme zu homogenisieren. Hierfür sind Kreuzkanalmischer und spezielle Turbulenzmischer geeignet.

Statische Mischer sind handelsübliche Mischapparate und werden beispielsweise von der Fa. Fluitec Georg AG, Neftenbach, Schweiz für verschiedene Anwendungsbereiche angeboten.

Die erhaltene Isocyanatkomponente (A) weist vorzugsweise eine Viskosität bei 25 ° C von 50 mPas bis 700 mPas, besonders bevorzugt 80 bis 500 mPas, weiter bevozugt 100 bis 300 mPas und insbesondere 120 bis 150 mPas auf.

Bevorzugt liegt die Viskosität der Isocyanatkomponente A) kleiner als 1000 mPas, bevorzugt kleiner als 700 mPas, insbesondere kleiner als 500 mPas, spezifischer kleiner als 300 mPas, bevorzugt kleiner als 250 mPas, besonders bevorzugt kleiner als 200 mPas, insbesondere bevorzugt kleiner als 150 mPas bei 25 ° C.

Die Polyolkomponente (B) enthält vorzugsweise kein Treibmittel (d1), besonders bevorzugt enthält die Polyolkomponente (B) weder Treibmittel (d1) noch Treibmittel (d2). Wenn die Polyolkomponente (B) Treibmittel enthält sind dies vorzugsweise ausschließlich chemische Treibmittel (d3), besonders bevorzugt Ameisensäure und / oder Wasser, insbesondere Wasser.

Bevorzugt liegt die Viskosität der Polyolkomponente (B) bei 25 ° C bei kleiner als 1200 mPas, mehr bevorzugt kleiner als 900 mPas, besonders bevorzugt kleiner als 700 mPas und insbesondere bei kleiner als 500 mPas. Weiter liegt die Viskosität der Polyolkomponente (B) bei größer als 100 mPas, mehr bevorzugt größer als 200 mPas, besonders bevorzugt größer als 300 mPas weiter bevorzugt bei größer als 400 mPas und insbesondere bei größer als 450 mPas bei 25 ° C.

Dabei ist dem Fachmann bekannt, wie die Viskosität der Isocyanatkomponente (A) und der Polyolkomponente (B) angepasst werden kann. Dies kann beispielsweise erfolgen durch die Wahl niederviskoserer Edukte oder die Zugabe bekannter Viskositätsverminderer, wie oberflächenaktiver Substanzen.

Dabei ist es erfindungswesentlich, dass das Massenverhältnis der der Isocyanatkomponente (A) zu der Polyolkomponente (B) größer ist als 1,2, , vorzugsweise größer 1,3, noch mehr bevorzugt größer 1,35, noch mehr bevorzugt größer als 1,4, besonders bevorzugt größer als 1,45, insbesondere bevorzugt größer als 1,5, und ganz besonders bevorzugt größer als 1,6 und vorzugsweise kleiner 2,5, besonders bevorzugt kleiner 2,2 und insbesondere kleiner als 2,0 ist.

Schließlich betrifft die vorliegende Erfindung die Verwendung einer Isocyanatkomponente (A), enthaltend polymeres MDI mit einem Gehalt an difunktionellem MDI von kleiner als 40 Gew.-% (a) und aliphatische, halogenierte Kohlenwasserstoffverbindung (d1) und einer Polyolkomponente (B), enthaltend Polyesterpolyol (b1) sowie (b2) mindestens ein Polyetherpolyol, zur Herstellung von Polyurethanschaumstoffen. Sowie einen Polyurethanschaumstoff, erhältlich nach einem erfindungsgemäßen Verfahren. Die Dichte solcher erfindungsgemäßen Schaumstoffe liegt vorzugsweise zwischen 10 und 150 g/L, besonders bevorzugt 15 und 100 g/L, mehr bevorzugt zwischen 20 und 70 g/L und insbesondere zwischen 25 und 60 g/L.

Das erfindungsgemäße Verfahren liefert eine Reihe von Vorteilen. So werden lagerstabile Komponenten (A) und (B) erhalten, welche die sichere Produktion von Schaumstoffen ermöglichen. Weiter werden Schaumstoffe mit verbesserten Eigenschaften, beisipielsweise einer verbesserten Druckfestigkeit sowie einer verbesserten Dimensionsstabilität erhalten.

Im Folgenden wird die Erfindung anhand von Beispielen erläutert.

### Verfahren

Die bestimmten Parameter wurden wie folgt ermittelt:

### Hydroxylzahl

Die Hydroxylzahl wurde gemäß DIN 53240 (1971-12) bestimmt

### Rohdichte

Die Rohdichte wurde auf drei verschiedene Arten bestimmt:
1) Becherrohdichte
   Dazu wurden die Ausgangsverbindungen in einen Becher mit bekanntem Volumen gegeben und im Becher von Hand gemischt. Nach Aushärtung wurde der Teil des Schaums, der über den Rand des Bechers überstand abgeschnitten. Die Becherrohdichte ist der Quotient aus dem Schaumgewicht im Becher und dessen Volumen. Die Becherrohdichte wurde nach Annex E des europäischen Standards EN 14315-1 bestimmt.
2) Kernrohdichte
   Zur Bestimmung der Kernrohdichte wurden mehrere Lagen der Reaktionsmischung auf eine PE-Platte gesprüht. Zur Bestimmung der Kerndichte nach Aushärten des Schaumstoffs wurden Proben aus der Mitte des Schaums ohne Haut ausgeschnitten. Diese Proben wurden gewogen und deren Volumen wurde bestimmt, aus diesen Werten wurde dann die Dichte berechnet. Die Kernrohdichte wurde nach dem europäischen Standard EN ISO 845 bestimmt.
3) Gesamtfreischaumdichte
   Zur Bestimmung der Gesamtfreischaumdichte wurde wie zur Bestimmung der Kernrohdichte vorgegangen und eine Schaumprobe aus der Mitte der Probe mit allen Häuten vom Boden bis zur Oberfläche entnommen. Diese Proben wurden gewogen und deren Volumen wurde bestimmt, aus diesen Werten wurde dann die Dichte berechnet. Die Gesamtfreischaumrohdichte wurde nach Annex C des europäischen Standards EN 14315-2 bestimmt.

### Startzeit

Die Startzeit wurde als die Zeit zwischen dem Beginn des Vermischens und dem Start der Volumenexpansion der Mischung ermittelt. Die Startzeit wurde gemäß Annex E des europäischen Standards EN 14315-1 bestimmt.

### Gelzeit

Die Gelzeit wurde als die Zeitspanne zwischen dem Vermischen und dem Zeitpunkt, zu dem Fäden aus der Reaktionsmischung gezogen werden konnten, bestimmt. Die Gelzeit wurde gemäß Annex E des europäischen Standards EN 14315-1 bestimmt.

### Klebefreizeit

Die Klebefreizeit wurde als die Zeitspanne zwischen dem Vermischen und dem Zeitpunkt, zu dem die obere Oberfläche des Schaums nicht mehr klebt, bestimmt. Die Klebefreizeit wurde gemäß Annex E des europäischen Standards EN 14315-1 bestimmt.

### Steigzeit

Die Steigzeitzeit wurde als die Zeitspanne zwischen dem Beginn und dem Ende der Schaumexpansion ermittelt. Die Steigzeit wurde gemäß Annex E des europäischen Standards EN 14315-1 bestimmt.

### Thermische Leitfähigkeit

Die thermische Leitfähigkeit einer Schaumprobe wurde unter Einsatz eines Wärmefluss-Messgeräte Lasercomp FOX 314 bei einer Temperatur von 10 ° C gemäß dem europäischen Standard EN 12667 ermittelt. Zur Herstellung der Proben wurden mehrere Lagen der Reaktionsmischung auf eine PE-Platte gesprüht.

Der Ausgangswert der thermischen Leitfähigkeit wurde nach der europäischen Norm EN 14315-1-C.3 bestimmt. Dazu wurde ein Probenkörper mit den Dimensionen 300mm x 300 mm x 30 mm aus dem Kern des Schaums herausgeschnitten, der höchstens 8 Tage alt ist. Nach dem Konditionieren der Probe über 16 Stunden bei 23 ° C +- 3 ° C und 50 +- 10 % relativer Luftfeuchtigkeit wurde der Test der thermischen Leitfähigkeit wie oben beschrieben durchgeführt.

### Druckfestigkeit bei 10 % Stauchung

Die Bestimmung der Druckfestigkeit bei 10 % Stauchung erfolgte gemäß dem europäischen Standard EN 826 unter Verwendung eines Instron 5550R Testgeräts.

### Anteil der geschlossenen Zellen

Der Anteil der geschlossenen Zellen wurde mit einem Pycnometer ACCUPYC 1330 gemäß dem europäischen Standard EN ISO 4590 bestimmt.

### Dimensionsstabilität

Die Dimensionsstabilität wurde gemäß der europäischen Norm EN 1604 bestimmt. Zur Herstellung des Probenkörpers wurden mehrere Lagen der Reaktionsmischung auf eine Polyethylenplatte gespritzt. Ein Probenkörper mit den Dimensionen 200 mm x 200 mm x 30 mm wurde aus dem Kern herausgeschnitten. Die genaue Länge, Breite und Höhe des Probenkörpers wurden mit einer Schieblehre jeweils vor und nach der Lagerung des Probenkörpers für 28 Stunden bei 70 ° C und 90 % relativer Luftfeuchtigkeit bestimmt. Der Unterschied der Messwerte vor und nach der Lagerung ergeben die Dimensionsstabilität.

Folgende Stoffe wurden zur Herstellung der Beispiele eingesetzt:

| | |
|---|---|
| Polyol 1: | Polyetherol, ausgehend von vic-TDA als Startermolekül sowie Ethylen oxid und Propylenoxid mit einer Hydroxylzahl von 390 mg KOH/g |
| Polyol 2: | Polyetherol ausgehend von einer Mischung aus Sucrose und Glycerin als Startermoleküle sowie Propylenoxid mit einer Hydroxylzahl von 450 mg KOH/g |
| Polyol 3: | Polyesterol ausgehend von Terephthalsäure, Diethyylenglycol, Ölsäure und einem Polyetherol, ausgehend von Glycerin als Startermolekül und Ethylen oxid mit einer Hydroxylzahl von 240 mg KOH/g |
| Polyol 4: | Polyesterol basierend auf Phthalsäureanhydrid, Diethylenglycol und Mo noethylenglycol mit einer Hydroxylzahl von 240 mg KOH/g |
| Polyol 5: | Polyetherol ausgehend von Ethylenediamin als Startermolekül und Propy lenoxid mit einer Hydroxylzahl von 470 mg KOH/g |
| Polyol 6: | Polyetherol ausgehend von Trimethylolpropane als Startermolekül und Eth ylenoxid mit einer Hydroxylzahl von : 250 mg KOH/g |
| Polyol 7: | Polyetherol ausgehend von einer Mischung aus Trimethylolpropane als Startermolekül und Ethylenoxid mit einer Hydroxylzahl von 600 mg KOH/g |
| Polyol 8: | Polyesterol ausgehend von Terephthalsäure, Phthalsäureanhydrid, Diethylenglycol, Ölsäure und Glycerin mit einer Hydroxylzahl von 240 mg KOH/g |

| | |
|---|---|
| Kat 1 | Dimethylethanolamin |
| Kat 2: | Tris-(Dimethylaminopropyl)amine, Polycat^{®} 34 von Evonik |
| Kat 3: | Pentamethyldiethylentriamin |
| Kat 4: | Dibuty-zinn-dilaurat, Kosmos^{®} 19 von Evonik |
| Kat 5: | Mischung aus 85 % Triethanolamin mit 15 % Diethanolamin |
| Kat 6: | Diethanolamin |
| Kat 7: | Polycat 203 von der Firma Evonik |
| Kat 8: | DABCO 2040 von der Firma Evonik |

| | |
|---|---|
| Surfactant 1: | Siliconsurfactant, Dabco^{®} DC 193 von Evonik |
| Surfactant 2: | Polyetherol ausgehend von Nonylphenol und Formaldehyd als Startermoleküle und Ethylenoxid mit einer Hydroxylzahl von 432 mg KOH/g |
| | |
| Vernetzer: | Glycerin, OH-Zahl 1825 mg KOH/g |
| Flammschutzmittel 1: | Tris (2-chlorisopropyl)phosphat |
| Flammschutzmittel 2: | Triethylphosphat |

| | |
|---|---|
| Treibmittel 1: | trans-1-Chlor-3,3,3-trifluor-propene (HCFO-1233zd(E)), Solstice^{®} |
| LBA | von Honeywell |
| Treibmittel 2: | Mischung von 93 Gew.-% 1,1,1,3,3-Pentafluorobutan (HFC-365mfc), Solkane^{®} 365 von Solvay, und 7 Gew.-% 1,1,1,2,3,3,3- Heptafluoropro pane (HFC-227ea), Solkane^{®} 227 von Solvay |
| Treibmittel 3: | 1,1,1,3,3-Pentafluorpropan (HFC-245fa), Enovate^{®} 3000 von Honeywell |
| Isocyanat 1: | Lupranat^{®} M20 S (polymeres Methylendiphenyldiisocyanat (PMDI), mit einer Viskosität von ca. 210 mPa^{∗}s bei 25 ° C und einem Gehalt an monomerem Diphenylmethandiisocyanat von 41,8 Gew.-% von BASF SE |
| Isocyanat 2: | Lupranat^{®} M50 (polymeres Methylendiphenyldiisocyanat (PMDI), mit einer Viskosität von ca. 500 mPa^{∗}s bei 25 ° C und einem Gehalt an monomerem Diphenylmethandiisocyanat von 30,6 Gew.-% von BASF SE |

### Herstellungsverfahren

Gemäß Tabellen 1 und 2 wurden für die Beispiele 1 bis 6 Polyolkomponenten (B) und Isocyanatkomponenten (A) hergestellt.

**Tabelle 1: Zusammensetzung der Polyolkomponenten**

| | Versuch 1 (Industry Standard) | Versuch 2 (Ver-gleichs-beispiel) | Versuch 3 (Ver-gleichsei-spiel) | Versuch 4 (erfin-dungsge-mäßes Bei-spiel) | Versuch 5 (erfin-dungsge-mäßes Bei-spiel) | Versuch 6 (erfin-dungsge-mäßes Bei spiel) |
|---|---|---|---|---|---|---|
| Polyol 3 | | | | | 40,2 | 38,755 |
| Polyol 4 | 29,75 | 33 | 37,5 | 37,5 | | |
| Polyol 5 | 22,63 | 22,63 | 25,8 | 25,105 | | |
| Polyol 1 | | | | | 12 | 11 |
| Polyol 2 | | | | | 6,175 | 6 |
| Polyol 6 | | | | | 12 | 12 |
| Flammschutzmittel 1 | 16 | 16 | 18,1 | 18,1 | 18 | 18 |
| Flammschutzmittel 2 | 3 | 3 | 3,4 | 3,4 | | |
| Kat. 5 | 4 | 3,5 | 3,98 | 4,0 | 2,4 | 3,5 |
| Kat. 6 | 2 | 2 | 2,27 | 2,3 | | |
| Crosslinker | 1,3 | 1,3 | 1,5 | 1,5 | 1,0 | 2,0 |
| Surfactant 1 | 0,4 | 0,4 | 0,45 | 0,45 | 1,0 | 1,0 |
| Surfactant 2 | 1,6 | 1,6 | 1,8 | 1,8 | | |
| Kat. 1 | 1 | 1 | 1,15 | 1,3 | 2,1 | 2,0 |
| Kat. 2 | 1,4 | 1,4 | 1,6 | 1,8 | 2,4 | 2,7 |
| Kat. 3 | | | | | 0,28 | 0,3 |
| Kat. 4 | 0,17 | 0,17 | 0,2 | 0,245 | 0,245 | 0,245 |
| Wasser | 2 | 2 | 2,25 | 2,5 | 2,2 | 2,5 |
| Treibmittel 2 | 9 | | | | | |
| Treibmittel 3 | 5,75 | | | | | |
| Treibmittel 1 | | 12 | | | | |

**Tabelle 2: Isocyanatkomponenten**

| | Versuch 1 (Industry Standard) | Versuch 2 (Ver-gleichs-beispiel) | Versuch 3 (Ver-gleichs-beispiel) | Versuch 4 (erfin-dungsge-mäßes Bei-spiel) | Versuch 5 (erfin-dungsge-mäßes Bei-spiel) | Versuch 6 (erfin-dungsge-mäßes Bei spiel) |
|---|---|---|---|---|---|---|
| Isocyanat 1 | 100 | 100 | | | | |
| Isocyanat 2 | | | 90 | 90 | 89 | 90 |
| Treibmittel 1 | | | 10 | 10 | 11 | 10 |

Die Komponenten wurden gründlich vermischt und anschließend gemäß des unten beschriebenen Verfahren verschäumt.

Der Polyolkomponente und die Isocyanatkomponente wurden bei 45° C in jeweils geschlossenen Behältern gelagert. Nach der Lagerung wurden die Komponenten auf 20 ° C abgekühlt und durch intensives Vermischen der Polyolkomponente mit der Isocyanatkomponente verschäumt. Das Verhältnis des Volumens der Isocyanatkomponente zu dem Volumen der Polyolkomponente wurde dabei so gewählt, dass das in Tabelle 3 widergegebene volumetrische Mischungsverhältnis eingestellt wurde. Das sich daraus ergebene gravimetrische Massenverhältnis der der Isocyanatkomponente zu der Polyolkomponente, ist ebenfalls in der Tabelle 3 angeführt.

**Tabelle 3: Volumetrisches und gravimetrisches Mischungsverhältnis von Isocyanatkomponente zu Polyolkomponente**

| | Versuch 1 (Industry Standard) | Versuch 2 (Ver-gleichs-beispiel) | Versuch 3 (Ver-gleichs-beispiel) | Versuch 4 (erfin-dungsge-mäßes Bei-spiel) | Versuch 5 (erfin-dungsge-mäßes Bei-spiel) | Versuch 6 - (erfin-dungsge-mäßes Bei-spiel) |
|---|---|---|---|---|---|---|
| Volumen (Isocyanatkomponente) / Volumen (Polyolkoponente) | 1 | 1 | 1 | 1,25 | 1,25 | 1,5 |
| Masse (Isocyanatkomponente) / Masse (Polyolkoponente) | 1,06 | 1,06 | 1,08 | 1,35 | 1,34 | 1,60 |

An den so hergestellten Proben wurden die Start-, Abbinde-, Steig- und Klebefreizeit und die freigeschäumte Rohdichte nach verschiedenen Lagerzeiten (0 Tagen; 60 Tagen und 120 Tagen) der Komponenten bei 45 ° C bestimmt. Das Ergebnis ist in Tabelle 4 zusammengefasst.

**Tabelle 4: Effekt der Lagerung der Polyol und Isocyanatkomponenten bei 45 ° C auf die Reaktivität der Schaumsysteme**

| | Versuch 1 (Industry Standard) | Versuch 2 (Ver-gleichs-beispiel) | Versuch 3 (Ver-gleichs-beispiel | Versuch 4 (erfin-dungsge-mäßes Bei-spiel) | Versuch 5 (erfin-dungsge-mäßes Bei-spiel) | Versuch 6 (erfin-dungsge-mäßes Bei-spiel) |
|---|---|---|---|---|---|---|
| Lagerzeit [Tagen] | 0 | 0 | 0 | 0 | 0 | 0 |
| Startzeit [s] | 2,9 | 2,9 | 3 | 3,1 | 2,8 | 2,8 |
| Abbindezeit [s] | 7,3 | 7,2 | 7,2 | 7,3 | 6,3 | 6,2 |
| Klebfreizeit [s] | 8,9 | 9,0 | 9,0 | 8,8 | 8,5 | 8,5 |
| Steigzeit [s] | 16,8 | 16,4 | 16,7 | 17 | 13,7 | 13,5 |
| Freigeschäumte Rohdichte [g/l] | 33,4 | 33,1 | 33,2 | 33,3 | 32,3 | 32 |
| Lagerzeit [Tagen] | 60 | 60 | 60 | 60 | 60 | 60 |
| Startzeit [s] | 3 | 6,7 | 3,2 | 3,4 | 3 | 3 |
| Abbindezeit [s] | 7,6 | 16,2 | 7,4 | 7,3 | 6,4 | 6,5 |
| Klebfreizeit [s] | 9,3 | 22,7 | 9,3 | 9,1 | 8,8 | 8,9 |
| Steigzeit [s] | 17,3 | 28,3 | 17,3 | 17,5 | 14,2 | 13,8 |
| Freigeschäumte Rohdichte [g/l] | 33,2 | 34,4 | 33,2 | 33,2 | 32,8 | 32,5 |
| Lagerzeit [Tagen] | 120 | 120 | 120 | 120 | 120 | 120 |
| Startzeit [s] | 3,2 | 10,1 | 4,1 | 4 | 3,5 | 3,3 |
| Abbindezeit [s] | 8,2 | 30,5 | 8 | 7,9 | 6,8 | 6,9 |
| Klebfreizeit [s] | 10,0 | 36,8 | 9,8 | 9,6 | 9,2 | 9,3 |
| Steigzeit [s] | 18,1 | 49,5 | 17,6 | 17,8 | 14,5 | 14,3 |
| Freigeschäumte Rohdichte [g/l] | 32,8 | 35,2 | 33,4 | 33,5 | 33,1 | 32,8 |

Man erkennt deutlich, dass die Reaktionszeiten und Dichte von allen Schaumsystemen nahezu unverändert die Lagerung bei erhöhter Temperatur überstehen. Einzige Ausnahme ist das Versuch 2 welcher nach den verschiedenen Lagerungsschritte deutlich verlängerte Reaktionszeiten und eine erhöhte Dichte aufweist und somit für die Anwendung im Spritzschaumbereich ungeeignet ist. Das Beispiel 2 wurde somit in der nachfolgenden Maschinenverschäumung nicht mehr betrachtet.

Darüber hinaus wurden die Schaumsysteme in einer Maschinenverschäumung untersucht. Hierzu wurden die abgemischten Polyol- und Isocyanatkomponenten, wie oben angegeben in einer Spritzschaummaschine bei 42 ± 3 ° C Komponententemperatur verschäumt, in dem die Komponenten mit einem Druck von 100 ± 10 bar in einem Hochdruckmischkopf vermischt wurden. Es wurden 5 Lagen mit einer durchschnittlichen Lagendicke von 2 cm hergestellt. Aus den so hergestellten Proben wurden die Prüfkörper zur Bestimmung der Druckfestigkeit, der Geschlossenzelligkeit, der Wärmeleitfähigkeit sowie der Dimensionsstabilität entnommen. Ferner wurde die Schaumstruktur ermittelt, in dem der Schaum in Schaumaufsteigrichtung geschnitten und an der Schnittkante die Schaumstruktur und Homogenität visuell beurteilt wurde. Die Ergebnisse sind in Tabelle 5 zusammengefasst.

**Tabelle 5: Beurteilung der Druckfestigkeit, Geschlossenzelligkeit, Wärmeleitfähigkeit, Dimensionsstabilität sowie Schaumstruktur der in der Maschinenverschäumung hergestellten Proben.**

| | Versuch 1 - (In-dustry Standard) | Versuch 3 - (Vergleichs-beispiel) | Versuch 4-(erfin- dungsgemäßes Beispiel) | Versuch 5-(erfin- dungsgemäßes Beispiel) | Versuch 6 - (erfindungsgemäßes Beispiel) |
|---|---|---|---|---|---|
| Kern freigeschäumte Rohdichte [kg/m³] | 37,2 | 37,1 | 38,3 | 38,4 | 38,5 |
| Gesamt freigeschäumte Rohdichte [kg/m³] | 38,0 | 37,5 | 39,2 | 39,1 | 39,3 |
| Druckfestigkeit [kPa] | 220 | 165 | 220 | 248 | 280 |
| Geschlossenzelligkeit [%] | 95 | 81 | 83 | 93 | 93 |
| Wärmeleitfähig-keit bei 10° C [mW/(m^{∗}K)] | 20,4 | 23,2 | 22,8 | 21 | 20,8 |
| Dimensionsstabilität [%] nach 48 Stunden bei 70 ° C und 90 % relativer Luftfeuchtigkeit | | | | | |
| in den drei Raumrichtungen | | | | | |
| Dicke | 5,2 | 4,3 | 2,3 | 1,9 | 0,3 |
| Breite | 4,5 | 5,4 | 3,3 | 1,7 | 0,1 |
| Länge | 2,3 | 5,6 | 3,4 | 1,6 | 0,9 |
| Summe | 12,0 | 15,3 | 9,0 | 5,2 | 1,3 |

Man erkennt deutlich, dass die erfindungsgemäßen Beispiele 4, 5 und 6 eine deutlich höhere Druckfestigkeit als das Vergleichsbeispiel 3 aufweisen und in diesem Parameter sogar teilweise besser als der aktuelle Industriestandard auf Basis des umweltunfreundlichen HFC-Treibmittels sind. Die Geschlossenzelligkeiten der erfindungsgemäßen Beispiele sind ebenfalls höher und die Wärmeleitfähigkeiten geringer und damit besser als die des Vergleichsbeispiels 3. Gleiches zeigt sich auch bei Betrachtung der Dimensionsstabilitäten der erfindungsgemäßen Beispiele im Vergleich zum Vergleichsbeispiel. Dieser Parameter ist sogar bei den erfindungsgemäßen Beispielen besser als bei dem aktuellen Industriestandard auf Basis von HFC als Treibmitteln.

Wird dagegen ein konventionelles Sprühsystem mit höherfunktionellem Isocyanat oder einem Massenverhältnis der der Isocyanatkomponente (A) zu der Polyolkomponente (B) kleiner als 1,1, eingesetzt, verschlechtern sich die Mechanischen Eigenschaften, wie Druckfestigkeit, Elastizitätsmodul und Anteil an geschlossenen Zellen und damit die Wärmeleitfähigkeit. Dies ergibt sich aus den folgenden Versuchen:
Dabei wurde die nachfolgende Polyolkomponente (B) eingesetzt. Diese Polyolkomponente wird im Folgenden als "konventionelle Polyolkomponente" bezeichnet.

**Tabelle 6: Aufbau der konventionellen Polyolkomponente**

| | |
|---|---|
| **Polyol 1** | 12 |
| **Polyol 2** | 10 |
| **Polyol 7** | 5 |
| **Polyol 8** | 35 |
| **Vernetzer** | 0,86 |
| **Flammschutzmittel** | |
| **1** | 16 |
| **Kat 3** | 0,2 |
| **Kat 4** | 0,24 |
| **Kat 7** | 4 |
| **Kat 8** | 2 |
| **Treibmittel 1** | 12 |
| **Wasser** | **1**,9 |
| **Surfactant 1** | 0,8 |

Dieses wurde im Maschinenversuch wie oben beschrieben mit Isocyanat 1 bzw. Isocyanat 2 in unterschiedlichen Mischungsverhältnissen gemäß Tabelle 7 umgesetzt:

**Tabelle 7:**

| | Polyolkomponente | Isocyanatkomponente | Mischungsverhältnis | |
|---|---|---|---|---|
| | | | Volumen | Gewicht |
| Versuch 7 (Vergleichsbeispiel) | Konventionelle Polyolkomponente | Isocyanat 1 | 100 : 100 | 100 : 104 |
| Versuch 8 (Vergleichsbeispiel) | Konventionelle Polyolkomponente | Isocyanat 1 | 100 : 125 | 100 : 130 |
| Versuch 9 (Vergleichsbeispiel) | Konventionelle Polyolkomponente | Isocyanat 2 | 100 : 100 | 100 : 104 |
| Versuch 10 (Vergleichsbeispiel) | Konventionelle Polyolkomponente | Isocyanat 2 | 100 : 125 | 100 : 130 |

Aus den so hergestellten Proben wurden analog zu den Versuchen 1 und 3 bis 6 Prüfkörper zur Bestimmung der Druckfestigkeit, des Elastizitätsmoduls und der Geschlossenzelligkeit entnommen. Ferner wurde die Schaumstruktur ermittelt, in dem der Schaum in Schaumaufsteigrichtung geschnitten und an der Schnittkante die Schaumstruktur und Homogenität visuell beurteilt wurde. Die Ergebnisse sind in Tabelle 8 zusammengefasst.

**Tabelle 8:**

| | Versuch 7-(Vergleichs-beispiel) | Versuch 8-(Vergleichsbei-spiel) | Versuch 9-(Vergleichsbei-spiel) | Versuch 10 - (Vergleichsbeispiel) |
|---|---|---|---|---|
| Kern freigeschäumte Roh-dichte [kg/m³] | **38,1** | **40,8** | **39,4** | **41,2** |
| Gesamt freigeschäumte Rohdichte [kg/m³] | **39,4** | **42,1** | **41,5** | **44,6** |
| Druckfestigkeit [kPa] | **223** | **190** | **175** | **155** |
| Geschlossenzelligkeit [%] | **92** | **89** | **85** | **82** |

Tabelle 7 zeigt, dass im bei Einsatz konventioneller Sprühsysteme die Druckfestigkeit und die Geschlossenzelligkeit abnehmen wenn anstelle von Isocyanat 1 (mit einem Gehalt an monomerem Isocyanat von größer 40 %) Isocyanat 2 (mit einem Gehalt an monomerem Isocyanat von kleiner 40 %) eingesetzt wird bzw. wenn das Mischungsverhältnis unabhängig vom Isocyanat auf größer als 1 : 1,1 erhöht wird. Darüber hinaus führt der Einsatz von Isocyanat 2 in den Versuchen 9 und 10 zur Bildung von Schauminhomogenitäten und einer heterogenen Zellgröße.

## Patentansprüche

1. Verfahren zur Herstellung eines Polyurethanschaumstoffs bei dem man
(a) Polymeres MDI mit einem Gehalt an difunktionellem MDI von kleiner als 40 Gew.-%
(b) Verbindungen mit mindestens zwei mit Isocyanatgruppen reaktiven Wasserstoffatomen, enthaltend (b1) mindestens ein Polyesterpolyol sowie (b2) mindestens ein Polyetherpolyol
(c) gegebenenfalls Flammschutzmittel
(d) Treibmittel, enthaltend mindestens eine aliphatische, halogenierte Kohlenwasserstoffverbindung (d1), aufgebaut aus 2 bis 5 Kohlenstoffatomen, mindestens einem Wasserstoffatom und mindestens einem Fluor und/oder Chloratom, wobei die Verbindung (d1) mindestens eine Kohlenstoff-Kohlenstoff-Doppelbindung enthält,
(e) gegebenenfalls Katalysator und
(f) gegebenenfalls Hilfs- und Zusatzstoffe
zu einer Reaktionsmischung vermischt, die Reaktionsmischung auf ein Substrat sprüht und zum Polyurethanschaumstoff aushärten lässt, wobei
man eine Isocyanatkomponente (A), enthaltend Polyisocyanate (a) und Treibmittel (d1), und eine Polyolkomponente (B), enthaltend Verbindungen mit mindestens zwei mit Isocyanatgruppen reaktiven Wasserstoffatomen (b), herstellt und anschließend
die Isocyanatkomponente (A) und die Polyolkomponente (B) sowie gegebenenfalls weitere Verbindungen (c), (e) und (f) zur Reaktionsmischung vermischt, wobei das Massenverhältnis der Isocyanatkomponente (A) zur Polyolkomponente (B) mindestens 1,2 beträgt.

2. Verfahren nach Anspruch 1, **dadurch gekennzeichnet, dass** die Viskosität der Polyisocyanate (a) bei 25° C 250 mPas bis 1000 mPas beträgt.

3. Verfahren nach Anspruch 1 oder 2, **dadurch gekennzeichnet, dass** der Anteil der Komponente (d1), bezogen auf das Gesamtgewicht der Isocyanatkomponente (A) 1 bis 25 Gew.-% beträgt.

4. Verfahren nach einem der Ansprüche 1 bis 3, **dadurch gekennzeichnet, dass** die Isocyanatkomponente (A) weiter physikalische Treibmittel (d2) enthält.

5. Verfahren nach einem der Ansprüche 1 bis 4, **dadurch gekennzeichnet, dass** die Isocyanatkomponente (A) (f1) oberflächenaktive Substanzen enthält.

6. Verfahren nach einem der Ansprüche 1 bis 5, **dadurch gekennzeichnet, dass** die Isocyanatkomponente (A) eine Viskosität bei 25 ° C von50 mPas bis 700 mPas aufweist.

7. Verfahren nach einem der Ansprüche 1 bis 6, **dadurch gekennzeichnet, dass** das Polyesterpolyol (b1) mindestens ein Polyesterol (b1a) enthält, das erhältlich ist durch Veresterung von
(b1a1) 10 bis 80 Mol-% einer Dicarbonsäurezusammensetzung, enthaltend
(b1a11) 20 bis 100 Mol-%, bezogen auf die Dicarbonsäurezusammensetzung, einer oder mehrerer aromatischer Dicarbonsäuren oder Derivate derselben,
(b1a12) 0 bis 80 Mol-%, bezogen auf die Dicarbonsäurezusammensetzung , einer oder mehrerer aliphatischer Dicarbonsäuren oder Derivate derselben,
(b1a2) 0 bis 30 Mol-% einer oder mehrerer Fettsäuren und/oder Fettsäurederivate,
(b1a3) 2 bis 70 Mol-% eines oder mehrerer aliphatischer oder cycloaliphatischer Diole mit 2 bis 18 C-Atomen oder Alkoxylate derselben,
(b1a4) größer 0 bis 80 Mol-% eines Alkoxylierungsprodukts mindestens eines Startermoleküls mit einer mittleren Funktionalität von mindestens zwei, jeweils bezogen auf die Gesamtmenge der Komponenten (b1a1) bis (bla4), wobei sich die Komponenten (b1a1) bis (b1a4) zu 100 Mol-% addieren.

8. Verfahren nach Anspruch 7, **dadurch gekennzeichnet, dass** das zahlenmittlere Molekulargewicht des Polyesterols (b1) 400 bis 1000 g/mol und die mittlere Funktionalität mindestens 2 beträgt.

9. Verfahren nach einem der Ansprüche 1 bis 8, **dadurch gekennzeichnet, dass** das zahlenmittlere Molekulargewicht des Polyetherpolyols (b2) 150 bis 3000 g/mol und die mittlere Funktionalität 2 bis 6 beträgt.

10. Verfahren nach einem der Ansprüche 1 bis 9, **dadurch gekennzeichnet, dass** das Polyesterpolyol (b1) neben dem Polyesterpolyol (b1a) ein Polyesterpolyol (b1b) enthält, wobei das Polyesterpolyol (b1b) unter Abwesenheit der Komponente (b1a4) hergestellt wird.

11. Verfahren nach einem der Ansprüche 1 bis 10, **dadurch gekennzeichnet, dass** das Massenverhältnis der Summe der Komponenten (b1) zu Komponente (b2) 0,1 bis 7 beträgt.

12. Verfahren nach einem der Ansprüche 1 bis 11, **dadurch gekennzeichnet, dass** als Flammschutzmittel mindestens eine Verbindung, ausgewählt aus der Gruppe, bestehend aus, Tris-(2-chlorpropyl)phosphat (TCPP), Diethylethanphosphonat (DEEP), Triethylphosphat (TEP), Dimethylpropylphosphonat (DMPP) und Diphenylkresylphosphat (DPK) eingesetzt wird.

13. Verfahren nach einem der Ansprüche 1 bis 12, **dadurch gekennzeichnet, dass** als Treibmittel neben Komponente (d1) mindestens ein chemisches Treibmittel (d3) eingesetzt wird, und das chemische Treibmittel (d3) kein Bestandteil der Isocyanatkomponente (A) ist.

14. Verfahren nach einem der Ansprüche 1 bis 13, **dadurch gekennzeichnet, dass** die Polyolkomponente (B) eine Viskosität bei 25 ° C von100 mPas bis 700 mPas aufweist.

15. Verfahren nach einem der Ansprüche 1 bis 14, **dadurch gekennzeichnet, dass** das Massenverhältnis der Isocyanatkomponente (A) zur Polyolkomponente (B) größer als 1,2 und kleiner als 2,5 beträgt.

16. Polyurethanschaumstoff, erhältlich nach einem Verfahren gemäß einem der Ansprüche 1 bis 15.

## Claims

1. A process for the production of a polyurethane foam by mixing the following to give a reaction mixture:
(a) polymeric MDI with less than 40% by weight content of difunctional MDI
(b) compounds having at least two hydrogen atoms reactive toward isocyanate groups, comprising (b1) at least one polyester polyol and (b2) at least one polyether polyol
(c) optionally flame retardant
(d) blowing agent, comprising at least one aliphatic halogenated hydrocarbon compound (d1) composed of 2 to 5 carbon atoms and of at least one hydrogen atom and of at least one fluorine and/or chlorine atom, where the compound (d1) comprises at least one carbon-carbon double bond,
(e) optionally catalyst and
(f) optionally auxiliaries and additional substances, spraying the reaction mixture onto a substrate and allowing said reaction mixture to harden to give the polyurethane foam, where
an isocyanate component (A) comprising polyisocyanates (a) and blowing agent (d1), and a polyol component (B) comprising compounds (b) having at least two hydrogen atoms reactive toward isocyanate groups are produced, and then
isocyanate component (A) and polyol component (B), and also optionally other compounds (c), (e) and (f) are mixed to give the reaction mixture, where the ratio by mass of isocyanate component (A) to polyol component (B) is at least 1.2.

2. The process according to claim 1, wherein the viscosity of the polyisocyanates (a) at 25°C is 250 mPas to 1000 mPas.

3. The process according to claim 1 or 2, wherein the proportion of component (d1), based on the total weight of isocyanate component (A), is 1 to 25% by weight.

4. The process according to any of claims 1 to 3, wherein isocyanate component (A) further comprises physical blowing agents (d2).

5. The process according to any of claims 1 to 4, wherein isocyanate component (A) comprises (f1) surface-active substances.

6. The process according to any of claims 1 to 5, wherein the viscosity of isocyanate component (A) at 25°C is 50 mPas to 700 mPas.

7. The process according to any of claims 1 to 6, wherein the polyester polyol (b1) comprises at least one polyesterol (b1a) obtainable via esterification of (b1a1) 10 to 80 mol% of a dicarboxylic acid composition comprising
(b1a11) 20 to 100 mol%, based on the dicarboxylic acid composition, of one or more aromatic dicarboxylic acids or derivatives of same,
(b1a12) 0 to 80 mol%, based on the dicarboxylic acid composition, of one or more aliphatic dicarboxylic acids or derivatives of same,
(b1a2) 0 to 30 mol% of one or more fatty acids and/or fatty acid derivatives,
(b1a3) 2 to 70 mol% of one or more aliphatic or cycloaliphatic diols having 2 to 18 carbon atoms or alkoxylates of same,
(b1a4) greater than 0 to 80 mol% of an alkoxylation product of at least one starter molecule with average functionality of at least two,
based in each case on the total quantity of components (b1a1) to (bla4), where components (b1a1) to (b1a4) give a total of 100 mol%.

8. The process according to claim 7, wherein the number-average molar mass of the polyesterol (b1) is 400 to 1000 g/mol and the average functionality is at least 2.

9. The process according to any of claims 1 to 8, wherein the number-average molar mass of the polyether polyol (b2) is 150 to 3000 g/mol and the average functionality is 2 to 6.

10. The process according to any of claims 1 to 9, wherein the polyester polyol (b1) comprises, alongside the polyester polyol (b1a), a polyester polyol (b1b), where the polyester polyol (b1b) is produced in the absence of component (bla4).

11. The process according to any of claims 1 to 10, wherein the ratio by mass of the entirety of components (b1) to component (b2) is 0.1 to 7.

12. The process according to any of claims 1 to 11, wherein the flame retardant used comprises at least one compound selected from the group consisting of tris(2-chloropropyl) phosphate (TCPP), diethyl ethanephosphonate (DEEP), triethyl phosphate (TEP), dimethyl propylphosphonate (DMPP) and diphenyl cresyl phosphate (DPC).

13. The process according to any of claims 1 to 12, wherein blowing agent used comprises, alongside component (d1), at least one chemical blowing agent (d3), and the chemical blowing agent (d3) is not a constituent of isocyanate component (A).

14. The process according to any of claims 1 to 13, wherein the viscosity of polyol component (B) at 25°C is 100 mPas to 700 mPas.

15. The process according to any of claims 1 to 14, wherein the ratio by mass of isocyanate component (A) to polyol component (B) is above 1.2 and below 2.5.

16. A polyurethane foam obtainable by a process according to any of claims 1 to 15.

## Revendications

1. Procédé pour la préparation d'une mousse de polyuréthane, dans lequel on mélange
(a) du MDI polymère présentant une teneur en MDI difonctionnel inférieure à 40% en poids
(b) des composés présentant au moins deux atomes d'hydrogène réactifs avec des groupes isocyanate, contenant (b1) au moins un polyesterpolyol ainsi que (b2) au moins un polyétherpolyol
(c) le cas échéant des agents ignifuges
(d) des agents gonflants, contenant au moins un composé hydrocarboné halogéné aliphatique (d1), constitué par 2 à 5 atomes de carbone, au moins un atome d'hydrogène et au moins un atome de fluor et/ou de chlore, le composé (d1) contenant au moins une double liaison carbonecarbone,
(e) le cas échéant un catalyseur et
(f) le cas échéant des adjuvants et des additifs en un mélange réactionnel, on pulvérise le mélange réactionnel sur un substrat et on le laisse durcir en une mousse de polyuréthane, où
on prépare un composant isocyanate (A), contenant des polyisocyanates (a) et des agents gonflants (d1), et un composant polyol (B), contenant des composés présentant au moins deux atomes d'hydrogène réactifs avec des groupes isocyanate (b), et ensuite
on mélange le composant isocyanate (A) et le composant polyol (B) ainsi que le cas échéant d'autres composés (c), (e) et (f) en mélange réactionnel, le rapport massique du composant isocyanate (A) au composant polyol (B) valant au moins 1,2.

2. Procédé selon la revendication 1, **caractérisé en ce que** la viscosité des polyisocyanates (a) à 25°C est de 250 mPa.s à 1000 mPa.s.

3. Procédé selon la revendication 1 ou 2, **caractérisé en ce que** la proportion du composant (d1), par rapport au poids total du composant isocyanate (A) est de 1 à 25% en poids.

4. Procédé selon l'une quelconque des revendications 1 à 3, **caractérisé en ce que** le composant isocyanate (A) contient en outre des agents gonflants physiques (d2).

5. Procédé selon l'une quelconque des revendications 1 à 4, **caractérisé en ce que** le composant isocyanate (A) contient (f1) des substances tensioactives.

6. Procédé selon l'une quelconque des revendications 1 à 5, **caractérisé en ce que** le composant isocyanate (A) présente une viscosité à 25°C de 50 mPa.s à 700 mPa.s.

7. Procédé selon l'une quelconque des revendications 1 à 6, **caractérisé en ce que** le polyesterpolyol (b1) contient au moins un polyesterol (b1a) qui peut être obtenu par estérification de
(b1a1) 10 à 80% en mole d'une composition d'acide dicarboxylique, contenant
(b1a11) 20 à 100% en mole, par rapport à la composition d'acide dicarboxylique, d'un ou de plusieurs acides dicarboxyliques aromatiques ou des dérivés de ceux-ci, (b1a12) 0 à 80% en mole, par rapport à la composition d'acide dicarboxylique, d'un ou de plusieurs acides dicarboxyliques aliphatiques ou des dérivés de ceux-ci, (b1a2) 0 à 30% en mole d'un ou de plusieurs acides gras et/ou dérivés d'acides gras
(b1a3) 2 à 70% en mole d'un ou de plusieurs diols aliphatiques ou cycloaliphatiques comprenant 2 à 18 atomes de carbone ou des alcoxylates de ceux-ci,
(b1a4) plus de 0 à 80% en mode d'un produit alcoxylation d'au moins une molécule de départ présentant une fonctionnalité moyenne d'au moins deux,
à chaque fois par rapport à la quantité totale des composants (b1a1) à (b1a4), la somme des composants (b1a1) à (b1a4) valant 100% en mole.

8. Procédé selon la revendication 7, **caractérisé en ce que** le poids moléculaire moyen en nombre du polyesterol (b1) est de 400 à 1000 g/mole et la fonctionnalité moyenne est d'au moins 2.

9. Procédé selon l'une quelconque des revendications 1 à 8, **caractérisé en ce que** le poids moléculaire moyen en nombre du polyétherpolyol (b2) est de 150 à 3000 g/mole et la fonctionnalité moyenne est de 2 à 6.

10. Procédé selon l'une quelconque des revendications 1 à 9, **caractérisé en ce que** le polyesterpolyol (b1) contient, outre le polyesterpolyol (b1a), un polyesterpolyol (b1b), le polyesterpolyol (b1b) étant préparé en l'absence du composant (b1a4).

11. Procédé selon l'une quelconque des revendications 1 à 10, **caractérisé en ce que** le rapport massique de la somme des composants (b1) au composant (b2) est de 0,1 à 7.

12. Procédé selon l'une quelconque des revendications 1 à 11, **caractérisé en ce qu'**on utilise, comme agent ignifuge, au moins un composé choisi dans le groupe constitué par le phosphate de tris-(2-chloropropyle) (TCPP), l'éthanephosphonate de diéthyle (DEEP), le phosphate de triéthyle (TEP), le phosphonate de diméthylpropyle (DMPP) et le phosphate de diphénylcrésyle (DPK).

13. Procédé selon l'une quelconque des revendications 1 à 12, **caractérisé en ce qu'**on utilise, comme agent gonflant, outre le composant (d1), au moins un agent gonflant chimique(d3) et l'agent gonflant chimique (d3) ne faisant pas partie du composant isocyanate (A).

14. Procédé selon l'une quelconque des revendications 1 à 13, **caractérisé en ce que** le composant polyol (B) présente une viscosité à 25°C de 100 mPa.s à 700 mPa.s.

15. Procédé selon l'une quelconque des revendications 1 à 14, **caractérisé en ce que** le rapport massique du composant isocyanate (A) au composant polyol (B) est supérieur à 1,2 et inférieur à 2,5.

16. Mousse de polyuréthane, pouvant être obtenue selon un procédé selon l'une quelconque des revendications 1 à 15.
